# EUROPEAN PATENT APPLICATION

(11) **EP 4 746 081 A1**
(43) Date of publication of application: **20.05.2026**
(21) Application number: 25209393.5
(22) Date of filing: 17.10.2025
(51) Int. Cl.: H01M 4/66, H01M 10/04, H01M 10/0587, H01M 10/42, H01M 10/613

(54) **WOUND ELECTRODE ASSEMBLY**

(30) Priority: 11.11.2024 JP 2024196681
(71) Applicant: TOYOTA JIDOSHA KABUSHIKI KAISHA, Toyota-shi, Aichi-ken 471-8571 (JP)
(72) Inventor: TATEISHI, Mitsuru, Toyota-shi, 471-8571 (JP); UEDA, Masashi, Toyota-shi, 471-8571 (JP); IZUMI, Jun, Toyota-shi, 471-8571 (JP); MASUOKA, Shizuka, Toyota-shi, 471-8571 (JP); SATO, Aya, Toyota-shi, 471-8571 (JP); KATAYAMA, Yuji, Kosai-shi, 431-0422 (JP); MACHIDA, Keitaro, Kosai-shi, 431-0422 (JP); YAMAMOTO, Tatsuya, Kosai-shi, 431-0422 (JP)
(74) Representative: Kuhnen & Wacker Patent- und Rechtsanwaltsbüro PartG mbB

(57) **Abstract**

A wound electrode assembly (10) includes a first electrode (11A) and a second electrode (11B), which has a polarity different from that of the first electrode (11A), wound in a flat shape with a separator (12) in between. In the wound electrode assembly (10), the first electrode (11A) includes a resin base member, a conductive layer provided on a surface of the resin base member, and a first active material layer (200A) provided on a main surface of the conductive layer located opposite to a side on which the resin base member is located with respect to the conductive layer. A portion of the resin base member located on an inner side of the wound electrode assembly (10) is higher in heat dissipation performance than a portion of the resin base member located on an outer side of the wound electrode assembly (10).

## Description

### CROSS REFERENCE TO RELATED APPLICATIONS

This nonprovisional application is based on Japanese Patent Application No. 2024-196681 filed on November 11, 2024 with the Japan Patent Office, the entire contents of which are hereby incorporated by reference.

### BACKGROUND

### Field

The present disclosure relates to a wound electrode assembly.

### Description of the Background Art

Japanese Patent Laying-Open No. 2019-186195 discloses, as a current collector used for a conventional wound electrode assembly, a structure which includes an insulating layer and a conductive layer and in which the current collector has a plurality of through-holes penetrating the insulating layer (resin foil) and the conductive layer.

### SUMMARY

When a wound electrode assembly is formed by winding a sheet-shaped electrode with an active material layer applied to a conductive layer provided on a surface of the resin foil (resin base member), heat tends to accumulate inside the winding of the wound electrode assembly because the resin foil has poor heat dissipation performance compared with a metal foil.

The present disclosure has been made in view of the above problem. An object of the present disclosure is to provide a wound electrode assembly that can have increased heat dissipation performance inside a winding.

A wound electrode assembly according to the present disclosure is a wound electrode assembly including a first electrode and a second electrode, which has a polarity different from that of the first electrode, wound in a flat shape with a separator in between. In the wound electrode assembly, the first electrode includes a resin base member, a conductive layer provided on a surface of the resin base member, and a first active material layer provided on a main surface of the conductive layer located opposite to a side on which the resin base member is located with respect to the conductive layer. A portion of the resin base member located on an inner side of the wound electrode assembly is higher in heat dissipation performance than a portion of the resin base member located on an outer side of the wound electrode assembly.

With the configuration described above, the portion of the resin base member which is located on the inner side of the wound electrode assembly is higher in heat dissipation performance than the portion of the resin base member which is located on the outer side of the wound electrode assembly, and accordingly, the heat dissipation performance on the inner side of the wound electrode assembly can be increased.

In the wound electrode assembly according to the present disclosure, the resin base member may become higher in heat dissipation performance gradually or stepwise toward the inner side of the wound electrode assembly.

With the configuration described above, the heat dissipation performance can be increased gradually or stepwise to the inner side of the wound electrode assembly.

In the wound electrode assembly according to the present disclosure, the resin base member may include a first resin member and a second resin member higher in heat dissipation performance than the first resin member. When a direction parallel to a winding axis of the wound electrode assembly is a width direction, in the resin base member, a ratio of the second resin member in the width direction may become higher than a ratio of the first resin member in the width direction toward the inner side of the wound electrode assembly.

As the ratio between the first resin member and the second resin member in the width direction of the resin base member is adjusted as in the configuration described above, the heat dissipation performance on the inner side of the winding can be increased.

In the wound electrode assembly according to the present disclosure, the resin base member may be formed of a stack of a first resin member and a second resin member higher in heat dissipation performance than the first resin member. In the resin base member, a ratio of the second resin member in a thickness direction may become higher than a ratio of the first resin member in the thickness direction toward the inner side of the wound electrode assembly.

As the ration between the first resin member and the second resin member in the thickness direction of the resin base member is adjusted as in the configuration described above, the heat dissipation performance on the inner side of the winding can be increased.

In the wound electrode assembly according to the present disclosure, the resin base member may include an inner end portion located at a first end in a winding direction of the wound electrode assembly, and an outer end portion located at a second end in the winding direction. The resin base member may be formed of a first resin member and a second resin member joined to each other, the first resin member being located on an outer end portion side, the second resin member being located on an inner end portion side and being higher in heat dissipation performance than the first resin member. A ratio of the second resin member disposed along the winding direction may be higher than a ratio of the first resin member disposed along the winding direction.

As the ratio between the first resin member and the second resin member along the winding direction is adjusted as in the configuration described above, the heat dissipation performance on the inner side of the winding can be increased.

In the wound electrode assembly according to the present disclosure, the first resin member may be joined to the second resin member while biting thereinto along the winding direction.

With the configuration described above, the first resin member bites into the second resin member, thereby stabilizing joining of the first resin member and the second resin member.

In the wound electrode assembly according to the present disclosure, the second resin member may have self-extinguishing properties.

With the configuration described above, the wound electrode assembly can have a self-extinguishing function, thereby more easily increasing nonflammability of the wound electrode assembly.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view of a battery according to Embodiment 1.
Fig. 2 is an exploded perspective view of the battery according to Embodiment 1.
Fig. 3 is a sectional view of the battery of Fig. 1 as viewed in the direction of an arrow III-III.
Fig. 4 is a sectional view of a wound electrode assembly of Fig. 3 as viewed in the direction of an arrow IV-IV.
Fig. 5 is a sectional view of the wound electrode assembly of Fig. 3 as viewed in the direction of an arrow V-V.
Fig. 6 is a schematic partial sectional view of the wound electrode assembly of Fig. 3 as viewed in the direction of an arrow VI-VI.
Fig. 7 is a developed view of a first electrode.
Fig. 8 is an enlarged partial sectional view of a region VIII of the first electrode of Fig. 5.
Fig. 9 is an enlarged partial sectional view of a region IX of the wound electrode assembly of Fig. 5.
Fig. 10 is a developed view of a resin base member according to Embodiment 1.
Fig. 11 is a developed view of a resin base member according to Embodiment 2.
Fig. 12 is a developed view of a resin base member according to Embodiment 3.
Fig. 13 is a developed view of a resin base member according to Embodiment 4.
Fig. 14 is a developed view of a resin base member according to Embodiment 5.

### DESCRIPTION OF THE PREFERRED EMBODIMENTS

A current collector and a battery according to each embodiment of the present disclosure will be described with reference to the drawings. In the drawings referred to below, the same or corresponding members have the same reference signs assigned thereto.

### (Embodiment 1)

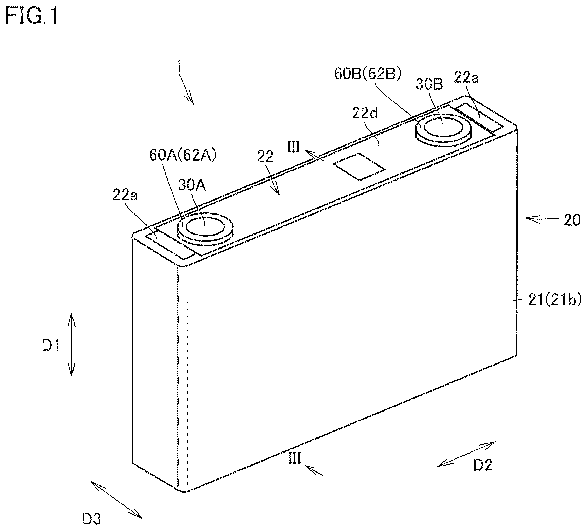

Fig. 1 is a perspective view of a battery according to Embodiment 1. As shown in Fig. 1, a battery 1 according to Embodiment 1 is a so-called rectangular battery. Battery 1 may be a secondary battery capable of charging and discharging, such as a lithium-ion battery or a nickel-metal hydride battery. Battery 1 may be used as, for example, a cell included in a power storage module mounted in an electrically powered vehicle.

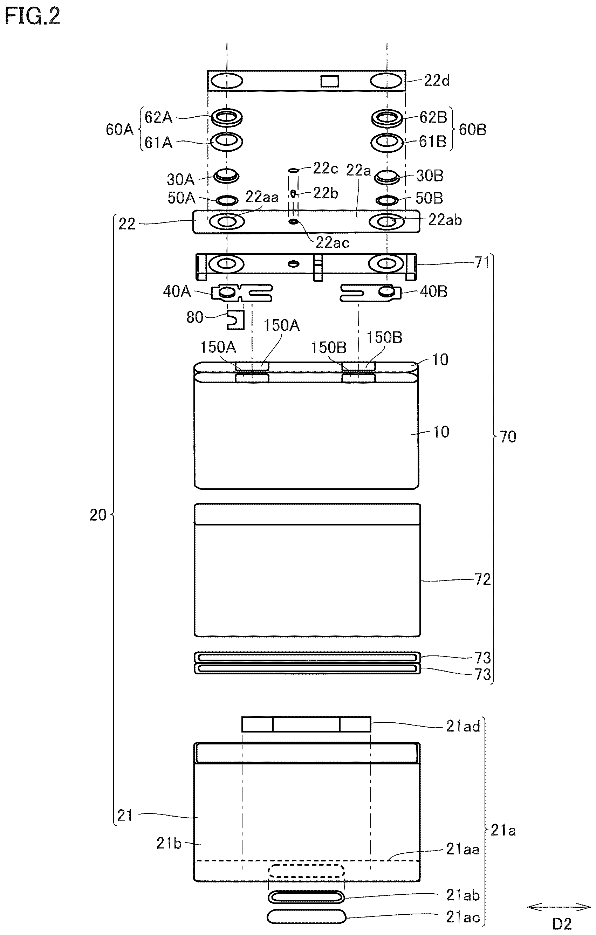

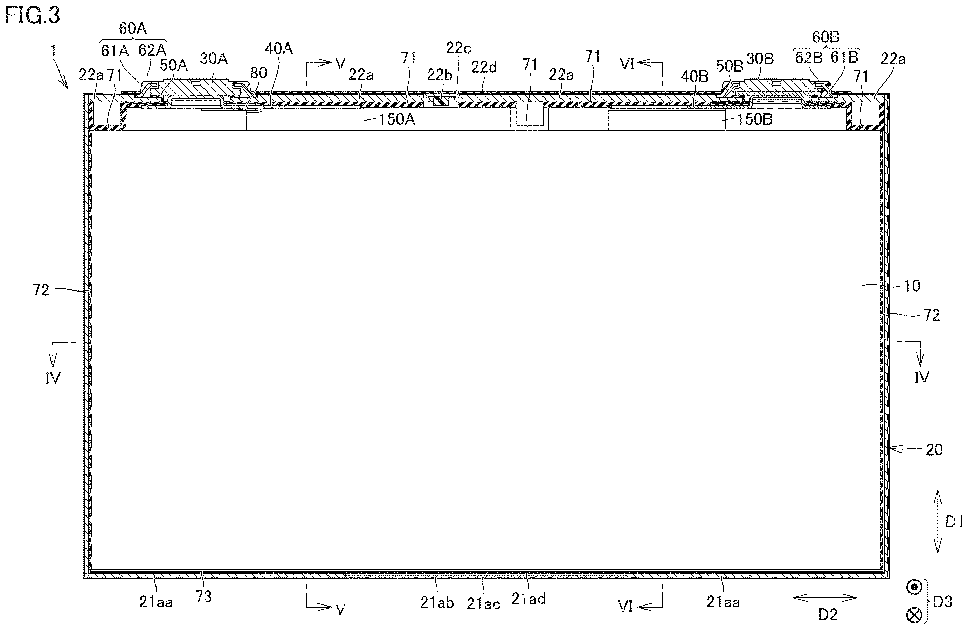

Fig. 2 is an exploded perspective view of the battery according to Embodiment 1. Fig. 3 is a sectional view of the battery of Fig. 1 as viewed in the direction of an arrow III-III. As shown in Figs. 1 to 3, battery 1 according to Embodiment 1 of the present disclosure includes a wound electrode assembly 10, a case 20, a first external terminal 30A, a second external terminal 30B, a first coupling member 40A, a second coupling member 40B, a first seal ring 50A, a second seal ring 50B, a first terminal support portion 60A, a second terminal support portion 60B, an insulating member 70, and a fuse protection portion 80. First, the components of battery 1 other than wound electrode assembly 10 will be described.

Case 20 is electrically conductive. An electrically conductive portion of case 20 is made of, for example, a metal such as aluminum. Case 20 houses wound electrode assembly 10. Case 20 also houses an electrolyte (not shown).

Case 20 includes a case body 21 and a lid 22. Case body 21 includes a bottom wall 21a and a peripheral wall 21b that rises from bottom wall 21a.

Bottom wall 21a includes a bottom body 21aa, a pressure release valve 21ab, an outer protective film 21ac, and an inner protective film 21ad. Peripheral wall 21b rises from bottom body 21aa. Pressure release valve 21ab is provided in bottom body 21aa. Outer protective film 21ac covers pressure release valve 21ab from the outside. Inner protective film 21ad covers pressure release valve 21ab from the inside. Bottom body 21aa and pressure release valve 21ab are made of a metal such as aluminum.

An opening is formed at the top of peripheral wall 21b. Peripheral wall 21b has an approximately rectangular external shape as viewed from the direction of the opening (the direction of the normal to the opening surface). The opening and bottom wall 21a are aligned in a first direction D1. First direction D1 may be the height direction or the upward-downward direction of battery 1. Peripheral wall 21b is made of a metal such as aluminum.

Lid 22 includes a lid body 22a, a sealing plug 22b, a plug cover 22c, and an insulating cover 22d.

Lid body 22a is joined to peripheral wall 21b by welding or the like so as to close the opening of peripheral wall 21b. Lid body 22a has a first coupling hole 22aa, a second coupling hole 22ab, and an injection hole 22ac. Injection hole 22ac is a through hole for injecting the electrolyte into case body 21 during manufacture of battery 1.

Sealing plug 22b seals injection hole 22ac. Plug cover 22c covers injection hole 22ac and sealing plug 22b. Insulating cover 22d covers injection hole 22ac, sealing plug 22b, and plug cover 22c.

First external terminal 30A and second external terminal 30B are provided so as to be exposed to the outside in battery 1. First coupling member 40A and second coupling member 40B are electrically conductive. First coupling member 40A and second coupling member 40B are at least partially disposed inside case 20.

First external terminal 30A or first coupling member 40A is inserted into first coupling hole 22aa. First external terminal 30A and first coupling member 40A are joined to each other. First coupling member 40A is joined to wound electrode assembly 10. As a result, first external terminal 30A is electrically connected to wound electrode assembly 10.

Second external terminal 30B or second coupling member 40B is inserted into second coupling hole 22ab. Second external terminal 30B and second coupling member 40B are joined to each other. Second coupling member 40B is joined to wound electrode assembly 10. As a result, second external terminal 30B is electrically connected to wound electrode assembly 10.

In the present embodiment, first external terminal 30A is a positive terminal, and second external terminal 30B is a negative terminal. First external terminal 30A and second external terminal 30B are aligned in a second direction D2. Second direction D2 is a direction orthogonal to first direction D1.

First seal ring 50A is provided along first coupling hole 22aa. First seal ring 50A is provided in the gap between lid body 22a and first external terminal 30A, and seals this gap. Second seal ring 50B is provided along second coupling hole 22ab. Second seal ring 50B is provided in the gap between lid body 22a and second external terminal 30B, and seals this gap. First seal ring 50A and second seal ring 50B have electrical insulation properties.

First terminal support portion 60A is locked to lid body 22a. First terminal support portion 60A supports first external terminal 30A from the outer peripheral side of first external terminal 30A. First terminal support portion 60A includes a first locking ring 61A and a first covering ring 62A. First locking ring 61A extends annularly so as to surround first coupling hole 22aa and is directly locked to lid body 22a. First covering ring 62A covers first locking ring 61A. First locking ring 61A supports first external terminal 30A via first covering ring 62A. First covering ring 62A is formed of a resin member having electrical insulation properties or relatively weak electrical conductivity.

Second terminal support portion 60B is locked to lid body 22a. Second terminal support portion 60B supports second external terminal 30B from the outer peripheral side of second external terminal 30B. Second terminal support portion 60B includes a second locking ring 61B and a second covering ring 62B. Second locking ring 61B extends annularly so as to surround second coupling hole 22ab and is directly locked to lid body 22a. Second covering ring 62B covers second locking ring 61B. Second locking ring 61B supports second external terminal 30B via second covering ring 62B. Second covering ring 62B is formed of an electrically insulating resin member.

Insulating member 70 has electrical insulation properties. Insulating member 70 is disposed between wound electrode assembly 10 and case 20. Insulating member 70 electrically insulates wound electrode assembly 10 and case 20 from each other. Insulating member 70 includes an insulating bracket 71, a peripheral surface insulating portion 72, and a bottom insulating portion 73.

Insulating bracket 71 is disposed between wound electrode assembly 10 and lid body 22a. Insulating bracket 71 is relatively rigid and is in contact with both wound electrode assembly 10 and lid body 22a. As a result, wound electrode assembly 10 is fixed to case 20 in first direction D1.

Peripheral surface insulating portion 72 is disposed between wound electrode assembly 10 and peripheral wall 21b. Wound electrode assembly 10 is formed of a film-shaped member.

Bottom insulating portion 73 is disposed between wound electrode assembly 10 and bottom wall 21a. Bottom insulating portion 73 is formed of a film-shaped member. In the present embodiment, bottom insulating portion 73 is bonded to wound electrode assembly 10. In addition, bottom insulating portion 73 covers only a part of the bottom surface of wound electrode assembly 10. The detailed configuration of bottom insulating portion 73 will be described together with the configuration of wound electrode assembly 10, which will be described below.

As shown in Fig. 2, battery 1 according to the present embodiment includes a plurality of wound electrode assemblies 10. Battery 1 typically includes two wound electrode assemblies 10. These wound electrode assemblies 10 are disposed in a third direction D3. Third direction D3 is a direction orthogonal to both first direction D1 and second direction D2. Peripheral surface insulating portion 72 may integrally cover the plurality of wound electrode assemblies 10 such that these wound electrode assemblies 10 are fixed to each other. In the present embodiment, insulating member 70 includes a plurality of bottom insulating portions 73 such that these bottom insulating portions 73 correspond one-to-one to the plurality of wound electrode assemblies 10.

The following will describe one wound electrode assembly 10 of the plurality of wound electrode assemblies 10. Each of the plurality of wound electrode assemblies 10 may have a configuration described below.

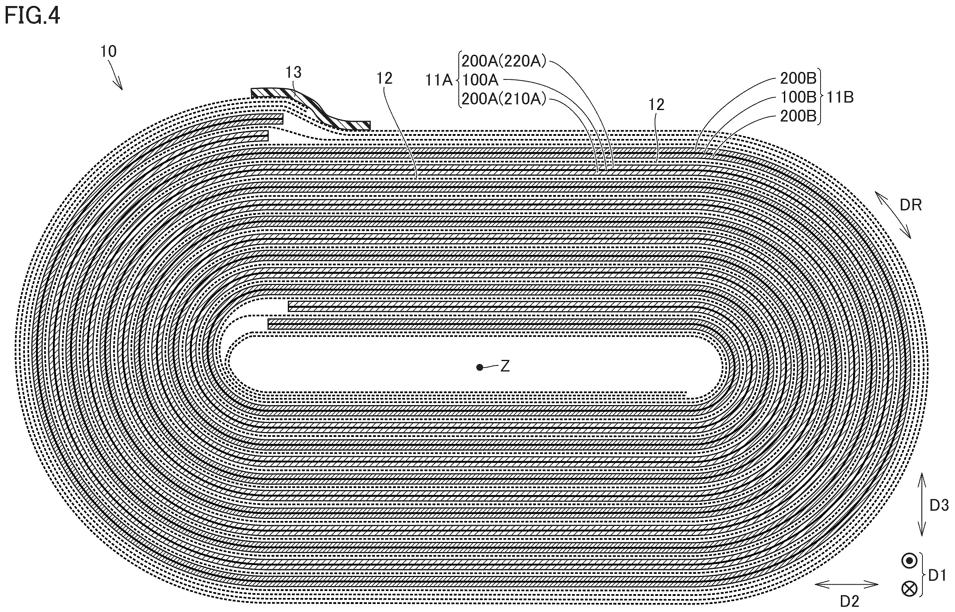

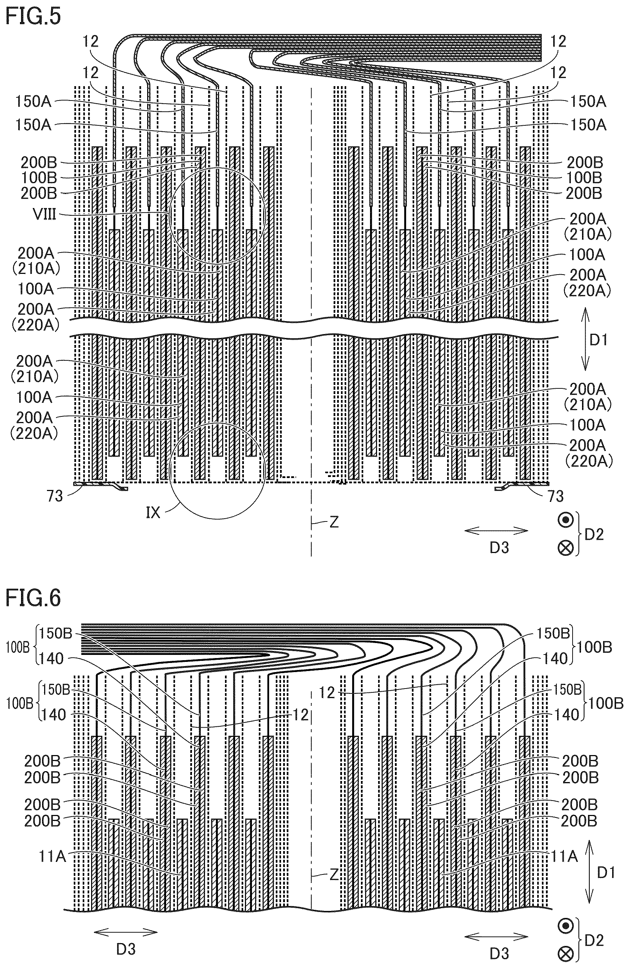

Fig. 4 is a sectional view of the wound electrode assembly of Fig. 3 as viewed in the direction of an arrow IV-IV. Fig. 5 is a sectional view of the wound electrode assembly of Fig. 3 as viewed in the direction of an arrow V-V. Fig. 6 is a schematic partial sectional view of the wound electrode assembly of Fig. 3 as viewed in the direction of an arrow VI-VI. As shown in Figs. 2 to 6, wound electrode assembly 10 includes a first electrode 11A, a second electrode 11B, a separator 12, and a tape member 13. Wound electrode assembly 10 is wound such that first electrode 11A, second electrode 11B, and separator 12 surround a winding axis Z. In Figs. 4 to 6, separator 12 is schematically indicated by the broken line.

First electrode 11A and second electrode 11B have a sheet-like external shape. Wound electrode assembly 10 is composed of a group of polar plates in which first electrode 11A and second electrode 11B are wound with one or more separators 12 in between.

In the present embodiment, first electrode 11A is a positive electrode, and second electrode 11B is a negative electrode. However, first electrode 11A may be the negative electrode, and second electrode 11B may be the positive electrode.

Separator 12 is provided between first electrode 11A and second electrode 11B. Separator 12 separates first electrode 11A and second electrode 11B from each other while allowing ions to move between first electrode 11A and second electrode 11B. The ions described above are, for example, lithium ions. Separator 12 has electrical insulation properties.

Of first electrode 11A, second electrode 11B, and separator 12, separator 12 is located on the innermost side with winding axis Z as the center. In addition, of first electrode 11A, second electrode 11B, and separator 12, separator 12 is located on the outermost side with winding axis Z as the center. The outer edge of separator 12 in a winding direction DR is fixed with tape member 13 disposed on the outer peripheral surface of separator 12.

Separator 12 may include, for example, a polyolefin resin. Separator 12 may be substantially made of the polyolefin resin. The polyolefin resin may include, for example, at least one selected from the group consisting of polyethylene (PE) and polypropylene (PP).

First electrode 11A includes a first current collector 100A, a first active material layer 200A, a first protective portion 300, and a second protective portion 400.

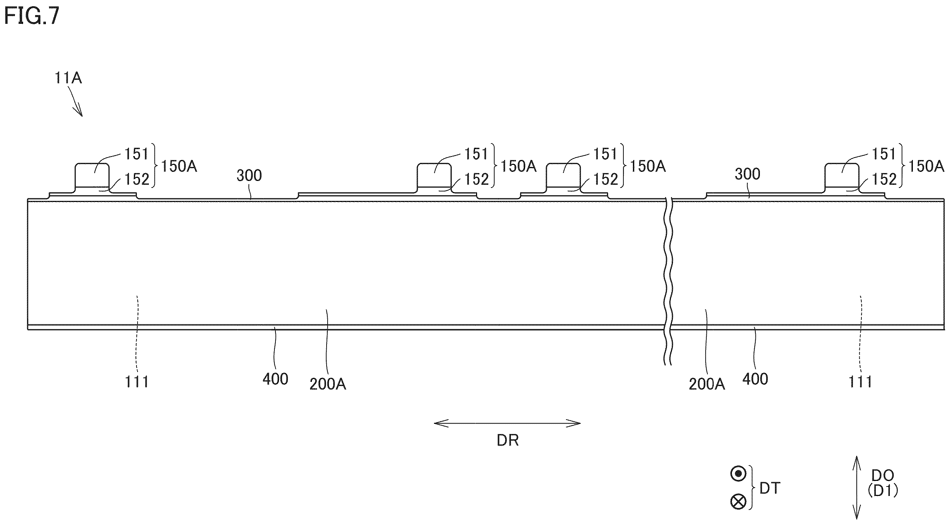

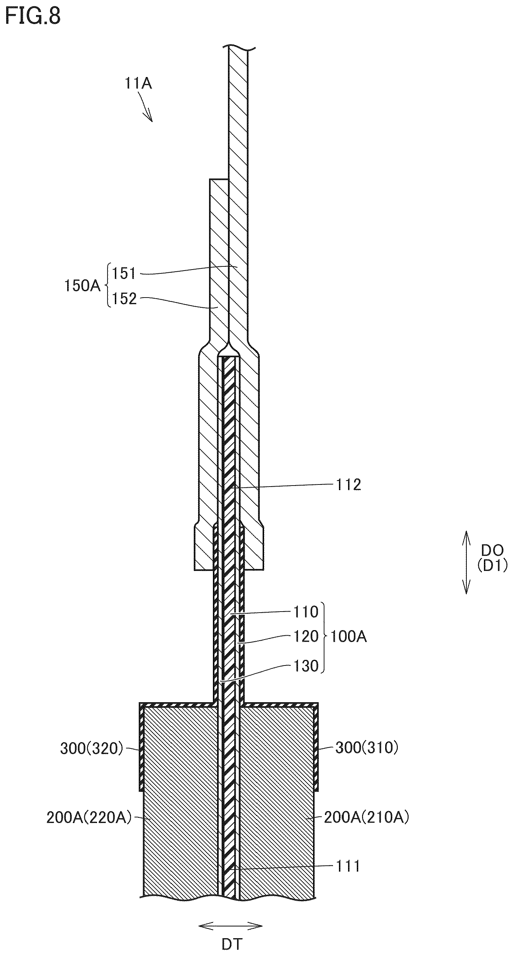

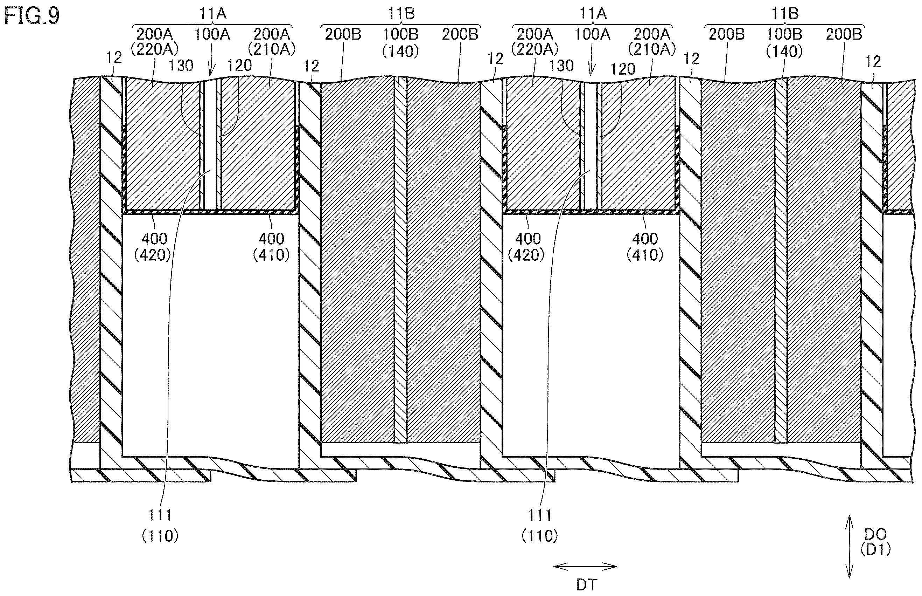

Fig. 7 is a developed view of the first electrode. In other words, Fig. 7 shows the state of first electrode 11A before it is wound. Fig. 8 is an enlarged partial sectional view of a region VIII of the first electrode in Fig. 5. Fig. 9 is an enlarged partial sectional view of a region IX of the wound electrode assembly in Fig. 5. As shown in Figs. 5 to 9, first current collector 100A includes a resin base member 110, a first conductive layer 120, a second conductive layer 130, and a plurality of first tabs 150A.

Resin base member 110 is made of an electrically insulating resin composition. Thus, first current collector 100A is a composite current collector composed of an electrically conductive member and an electrically insulating member. Resin base member 110 is made of a material higher in rigidity than separator 12. As a result, resin base member 110 can be made relatively thin.

Resin base member 110 includes a body portion 111 and a plurality of projecting piece portions 112. An orthogonal direction DO, which is orthogonal to a thickness direction DT of body portion 111, is approximately parallel to first direction D1. In other words, body portion 111 extends approximately parallel to first direction D1. Each of the plurality of projecting piece portions 112 projects from body portion 111 in the first direction. The plurality of projecting piece portions 112 are spaced apart from each other in winding direction DR. Each of the plurality of projecting piece portions 112 is provided with a first tab 150A, which will be described later.

The thickness of resin base member 110 is, for example, preferably 20 µm or less, more preferably 15 µm or less, and still more preferably 10 µm or less, for a reduced overall thickness of wound electrode assembly 10. The thickness of resin base member 110 is not particularly limited, as long as it has a desired rigidity. The thickness of resin base member 110 is only required to be, for example, 2 µm or more.

First conductive layer 120 is in contact with body portion 111 on a first side in thickness direction DT. In the present embodiment, first conductive layer 120 is located on the winding axis Z side as viewed from body portion 111. Also, first conductive layer 120 is in contact with body portion 111 over the entire surface on the first side in thickness direction DT.

Second conductive layer 130 is in contact with body portion 111 on a second side in thickness direction DT. In the present embodiment, second conductive layer 130 is located opposite to the winding axis Z side as viewed from body portion 111. Also, second conductive layer 130 is in contact with body portion 111 over the entire surface on the second side in thickness direction DT.

First conductive layer 120 and second conductive layer 130 are each made of a metal. In the present embodiment, first conductive layer 120 and second conductive layer 130 are made of an aluminum-containing metal. As a result, first current collector 100A can be preferably used as a positive-electrode current collector. First current collector 100A may be a negative-electrode current collector, and first conductive layer 120 and second conductive layer 130 may be made of a copper-containing metal.

The thickness of first conductive layer 120 and the thickness of second conductive layer 130 are smaller than the thickness of resin base member 110. The thickness of first conductive layer 120 and the thickness of second conductive layer 130 are, for example, 5 µm or less, and more preferably 2 µm or less, and still more preferably 1 µm or less, for a reduced overall thickness of wound electrode assembly 10. The thickness of first conductive layer 120 and the thickness of second conductive layer 130 are only required to be, for example, 0.1 µm or more in order to suppress excessive increases in the electrical resistances of first conductive layer 120 and second conductive layer 130.

First conductive layer 120 and second conductive layer 130 are provided by, for example, vapor deposition of an aluminum-containing metal onto body portion 111. Each of first conductive layer 120 and second conductive layer 130 may be a film-shaped member bonded to body portion 111.

Each of the plurality of first tabs 150A is joined to first conductive layer 120 and second conductive layer 130 by, for example, ultrasonic welding. Each of the plurality of first tabs 150A extends from body portion 111 along an extension direction in which projecting piece portion 112 extends from resin base member 110.

The plurality of first tabs 150A are disposed so as to be aligned with each other in third direction D3 (see Fig. 5). The plurality of first tabs 150A are joined to each other by, for example, ultrasonic welding. The plurality of first tabs 150A are joined to first coupling member 40A by, for example, ultrasonic welding (see Figs. 2 and 3).

As shown in Fig. 8, each of the plurality of first tabs 150A includes a first foil portion 151 and a second foil portion 152.

First foil portion 151 is located opposite to the resin base member 110 side as viewed from first conductive layer 120. First foil portion 151 is joined to first conductive layer 120. Second foil portion 152 is located opposite to the resin base member 110 side as viewed from second conductive layer 130. Second foil portion 152 is joined to second conductive layer 130. Second foil portion 152 is joined to first foil portion 151. These components are joined to each other by, for example, ultrasonic welding.

In the present embodiment, the length of first foil portion 151 in orthogonal direction DO orthogonal to thickness direction DT is larger than the length of second foil portion 152 in orthogonal direction DO. First foil portion 151 is joined to first coupling member 40A, and second foil portion 152 is not joined to first coupling member 40A. However, the configuration of first tab 150A is not limited thereto. First foil portion 151 or second foil portion 152 can be joined to first coupling member 40A. The length of second foil portion 152 in orthogonal direction DO may be larger than the length of first foil portion 151 in orthogonal direction DO.

First active material layer 200A is stacked on first conductive layer 120. First active material layer 200A is a positive-electrode active material layer, but it may be a negative-electrode active material layer. In the present embodiment, first active material layer 200A is also stacked on second conductive layer 130. First active material layer 200A includes a first inner active material layer 210A and a first outer active material layer 220A. First inner active material layer 210A is stacked on first conductive layer 120. First outer active material layer 220A is stacked on second conductive layer 130.

The upper edge of first active material layer 200A is separated from each of the plurality of first tabs 150A. The upper edge of first inner active material layer 210A is separated from first foil portion 151 of each of the plurality of first tabs 150A. The upper edge of first outer active material layer 220A is separated from second foil portion 152 of each of the plurality of first tabs 150A.

As shown in Fig. 9, the lower edge of first active material layer 200A is aligned with the lower edge of body portion 111.

Separator 12 is stacked on first active material layer 200A in the radial direction centered on winding axis Z. Separator 12 is stacked on first inner active material layer 210A in the radial direction described above. Separator 12 is also stacked on first outer active material layer 220A in the radial direction described above.

First protective portion 300 has electrical insulation properties and is made of, for example, ceramic. First protective portion 300 covers the upper portion of first active material layer 200A. First protective portion 300 further covers first current collector 100A between first tab 150A and first active material layer 200A.

First protective portion 300 includes a first inner protective portion 310 and a first outer protective portion 320. First inner protective portion 310 covers the upper portion of first inner active material layer 210A. First inner protective portion 310 covers first conductive layer 120 between first foil portion 151 and first inner active material layer 210A. First outer protective portion 320 covers the upper portion of first outer active material layer 220A. First outer protective portion 320 covers second conductive layer 130 between first outer active material layer 220A and first outer protective portion 320.

Second protective portion 400 has electrical insulation properties and is made of, for example, ceramic. Second protective portion 400 covers the lower portion of first active material layer 200A. Second protective portion 400 also covers a lower end face of resin base member 110.

Second protective portion 400 includes a second inner protective portion 410 and a second outer protective portion 420. Second inner protective portion 410 covers the lower portion of first inner active material layer 210A. Second outer protective portion 420 covers the lower portion of first outer active material layer 220A. First electrode 11A may not include second protective portion 400.

As shown in Figs. 4 to 6 and 9, second electrode 11B is stacked over first active material layer 200A with separator 12 in between in the radial direction described above. More specifically, second electrode 11B is stacked over first inner active material layer 210A with separator 12 in between, and is also stacked over first outer active material layer 220A with separator 12 in between.

Second electrode 11B includes a second current collector 100B and a second active material layer 200B. Second current collector 100B includes a conductive support portion 140 and a plurality of second tabs 150B (see Fig. 6). Conductive support portion 140 extends along orthogonal direction DO (first direction D1). The plurality of second tabs 150B extend from the upper end of conductive support portion 140. The plurality of second tabs 150B are joined to each other by ultrasonic welding and are also joined to second coupling member 40B (see Figs. 2 and 3).

The plurality of second tabs 150B and conductive support portion 140 are formed of an integral member, for example, formed of a metal foil. In the present embodiment, the plurality of second tabs 150B and conductive support portion 140 are made of, for example, a copper-containing metal. As a result, second current collector 100B may be preferably used as a negative electrode current collector. When first current collector 100A is a negative electrode current collector, the plurality of second tabs 150B and conductive support portion 140 may be made of an aluminum-containing metal.

Second active material layer 200B is stacked on both surfaces of conductive support portion 140 of second current collector 100B. In the present embodiment, second electrode 11B is a negative electrode. Thus, second active material layer 200B is a negative-electrode active material layer. Also, as shown in Fig. 9, the edge of second active material layer 200B in first direction D1 is located ahead of the edge of first active material layer 200A. Thus, the edge of second electrode 11B in first direction D1 is located ahead of the edges of first conductive layer 120, second conductive layer 130, and first active material layer 200A. Second active material layer 200B may be a positive-electrode active material layer.

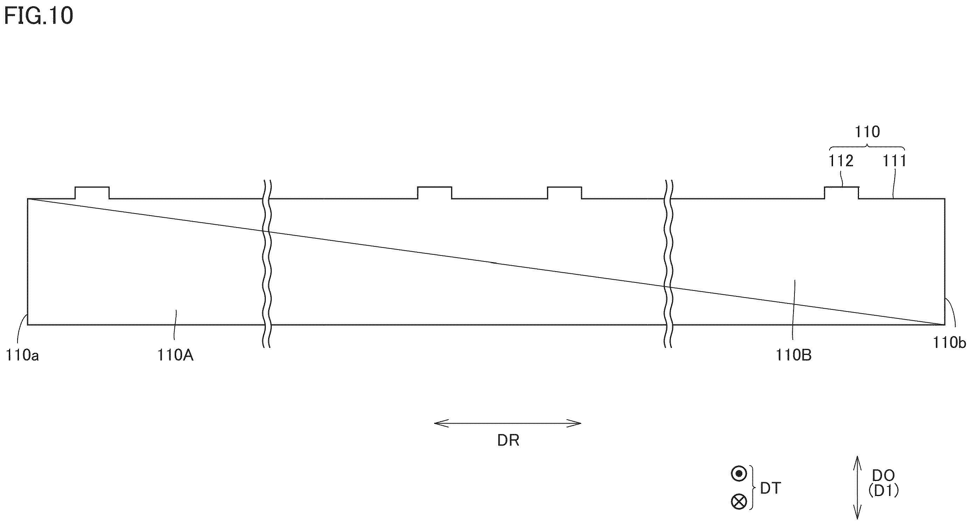

Fig. 10 is a developed view of a resin base member according to Embodiment 1. Referring to Fig. 10, a specific structure of resin base member 110 according to Embodiment 1 will be described.

As shown in Fig. 10, resin base member 110 has a first resin member 110A and a second resin member 110B. Second resin member 110B is higher in heat dissipation performance than first resin member 110A. For example, first resin member 110A may be a resin member such as polyphenylene sulfide (PPS) or polyethylene terephthalate (PET). Second resin member 110B may be a resin such as polyphenylene ether (PPE) or polyimide. PPE has high self-extinguishing properties.

Resin base member 110 has an outer end portion 110a and an inner end portion 110b at the opposite ends in winding direction DR. Outer end portion 110a constitutes the end portion located on the outer side in the winding direction in a wound state in which resin base member 110 is wound. Inner end portion 110b constitutes the end portion located on the inner side in the winding direction in the wound state.

Resin base member 110 has higher heat dissipation performance at the portion located on the inner side of wound electrode assembly 10 than at the portion located on the outer side of wound electrode assembly 10.

Specifically, when the direction parallel to the winding axis of wound electrode assembly 10 is the width direction of resin base member 110, in resin base member 110, the ratio of the second resin member in the width direction is higher than the ratio of first resin member 110A in the width direction toward the inner side of wound electrode assembly 10. The width direction is parallel to first direction D1.

Outer end portion 110a and inner end portion 110b described above have a first end and a second end on a first side and a second side in the width direction, respectively.

In an unfolded state in which resin base member 110 is unfolded, of two regions divided along the diagonal line connecting the first end of outer end portion 110a to the second end of inner end portion 110b, the region located on the first end side in the width direction is composed of second resin member 110B, and the region located on the second end side in the width direction is composed of first resin member 110A. First resin member 110A and second resin member 110B are joined to each other by, for example, welding or the like.

As resin base member 110 is configured as described above, in wound electrode assembly 10 with resin base member 110 wound, the ratio of second resin member 110B disposed on the inner side in the winding direction is higher than the ratio of first resin member 110A disposed on the inner side in the winding direction. On the other hand, in wound electrode assembly 10, the ratio of first resin member 110A disposed on the outer side in the winding direction is higher than the ratio of second resin member 110B disposed on the outer side in the winding direction. As a result, the heat dissipation performance of the portion located on the inner side of wound electrode assembly 10 can be made higher than the heat dissipation performance of the portion located on the outer side of wound electrode assembly 10.

Further, due to the arrangement of second resin member 110B as described above, all of projecting piece portions 112 can be formed of second resin member 110B, which has high heat dissipation performance. As a result, the heat dissipation performance from projecting piece portion 112 can be enhanced.

Further, as second resin member 110B is formed of a resin member having high self-extinguishing properties, wound electrode assembly 10 can have a self-extinguishing function, thereby more easily increasing nonflammability of wound electrode assembly 10.

Description has been given by way of example the case where the boundary between first resin member 110A and second resin member 110B is straight and the heat dissipation performance increases gradually toward the inner side of wound electrode assembly 10, but the present disclosure is not limited thereto. The boundary between first resin member 110A and second resin member 110B may have a stepwise shape such that the number of steps increases from inner end portion 110b toward outer end portion 110a, or the heat dissipation performance may increase stepwise toward the inner side of wound electrode assembly 10.

### (Embodiment 2)

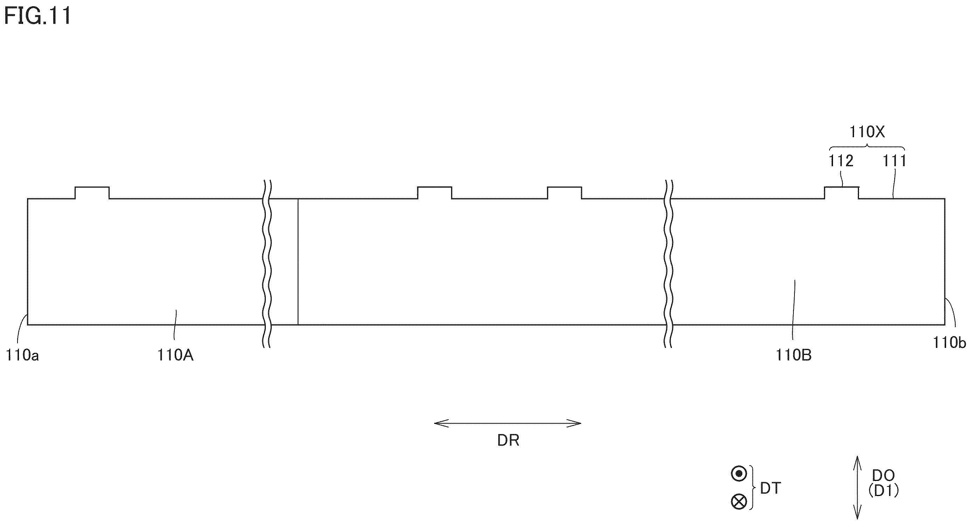

Fig. 11 is a developed view of a resin base member according to Embodiment 2. Referring to Fig. 11, a resin base member 110X according to Embodiment 2 will be described.

Resin base member 110X according to Embodiment 2 differs from resin base member 110 according to Embodiment 1 in the arrangements of first resin member 110A and second resin member 110B. The other configurations are substantially the same. Additionally, resin base member 110X according to Embodiment 2 can be used for wound electrode assembly 10 in place of resin base member 110 according to Embodiment 1.

In the present embodiment, also, resin base member 110X is configured such that the portion located on the inner side of wound electrode assembly 10 is higher in heat dissipation performance than the portion located on the outer side of wound electrode assembly 10.

In resin base member 110X, first resin member 110A is disposed on a first side in winding direction DR, and second resin member 110B is disposed on a second side in winding direction DR. In other words, first resin member 110A is located on the outer end portion 110a side, and second resin member 110B is located on the inner end portion 110b side.

The ratio of second resin member 110B disposed along winding direction DR is higher than the ratio of first resin member 110A disposed along winding direction DR. Specifically, the length of first resin member 110A along winding direction DR is smaller than the length of second resin member 110B along winding direction DR. First resin member 110A and second resin member 110B are joined to each other along a direction parallel to the winding axis.

As resin base member 110X is configured as described above, also in wound electrode assembly 10 with resin base member 110X wound, the heat dissipation performance of the portion located on the inner side of wound electrode assembly 10 can be made higher than the heat dissipation performance of the portion located on the outer side of wound electrode assembly 10.

Further, due to the arrangement of second resin member 110B as described above, the ratio of projecting piece portion 112 composed of second resin member 110B, which has high heat dissipation performance, among the plurality of projecting piece portions 112 can be increased. As a result, the heat dissipation performance from projecting piece portion 112 can also be enhanced.

### (Embodiment 3)

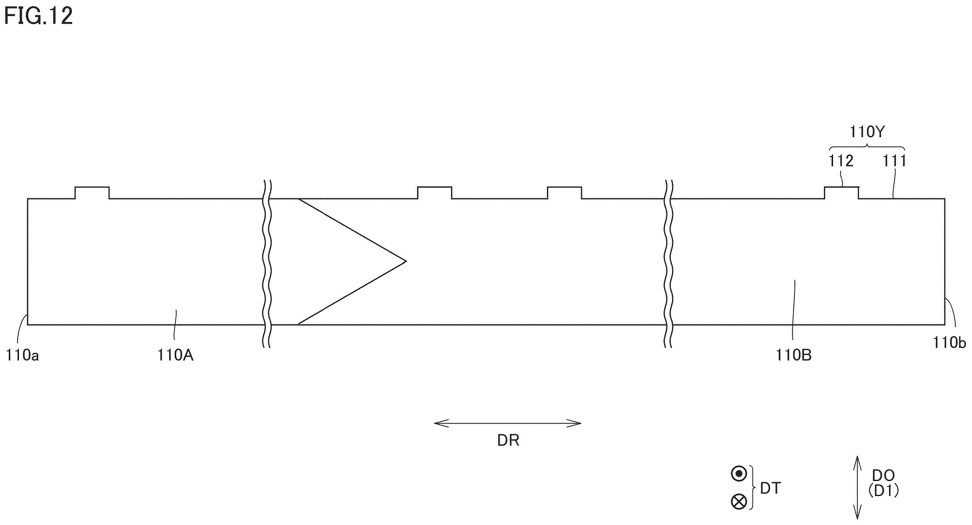

Fig. 12 is a developed view of a resin base member according to Embodiment 3. Referring to Fig. 12, a resin base member 110Y according to Embodiment 3 will be described.

Resin base member 110Y according to Embodiment 3 differs from resin base member 110X according to Embodiment 2 in the manner of joining first resin member 110A to second resin member 110B (more particularly, the shape of the joint). The other configurations are substantially the same. Additionally, resin base member 110Y according to Embodiment 3 can be used for wound electrode assembly 10 in place of resin base member 110 according to Embodiment 1.

In resin base member 110Y according to Embodiment 3, also, first resin member 110A is located on the outer end portion 110a side, and second resin member 110B is located on the inner end portion 110b side. Further, the ratio of second resin member 110B disposed along winding direction DR is higher than that of first resin member 110A disposed along winding direction DR.

In Embodiment 3, first resin member 110A is joined to second resin member 110B while biting thereinto along winding direction DR. This can stabilize the joining of first resin member 110A and second resin member 110B.

### (Embodiment 4)

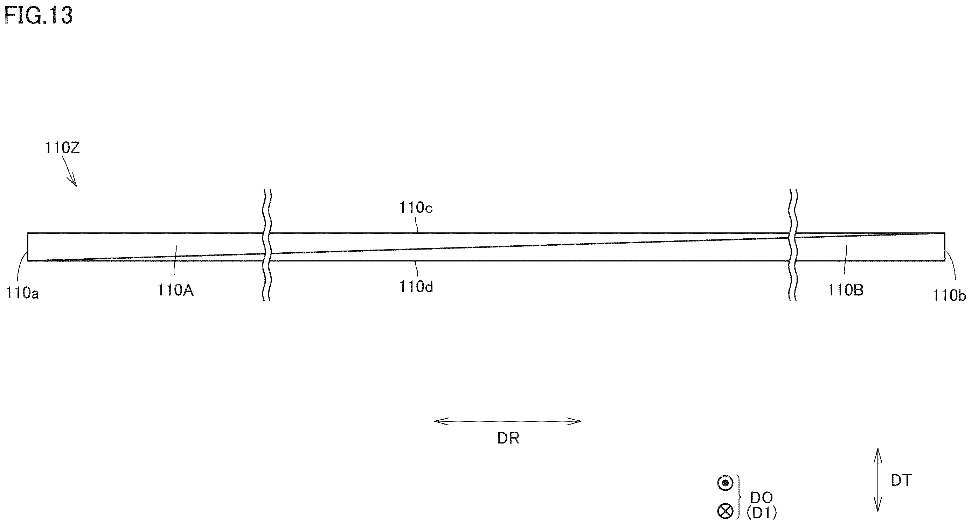

Fig. 13 is a developed view of a resin base member according to Embodiment 4. Referring to Fig. 13, a resin base member 110Z according to Embodiment 4 will be described.

Resin base member 110Z according to Embodiment 4 differs from resin base member 110 according to Embodiment 1 in that first resin member 110A and second resin member 110B are stacked. Additionally, resin base member 110Z according to Embodiment 4 can be used for wound electrode assembly 10 in place of resin base member 110 according to Embodiment 1.

In the present embodiment, also, resin base member 110Z is configured such that the portion located on the inner side of wound electrode assembly 10 is higher in heat dissipation performance than the portion located on the outer side of wound electrode assembly 10.

Specifically, in resin base member 110Z, the ratio of second resin member 110B in thickness direction DT is higher than the ratio of first resin member 110A in thickness direction DT toward the inner side of the wound electrode assembly.

Resin base member 110Z has, in the unfolded state, a first end 110c and a second end 110d on a first side and a second side, respectively, in thickness direction DT. In this unfolded state, of two regions divided along the diagonal line connecting second end 110d in thickness direction DT located at outer end portion 110a to first end 110c in thickness direction DT located at inner end portion 110b, the region located on the first side in thickness direction DT is composed of first resin member 110A. The region located on the second side in thickness direction DT of the two divided regions is composed of second resin member 110B.

Even with the configuration as described above, also in wound electrode assembly 10 with resin base member 110Z wound, the heat dissipation performance of the portion located on the inner side of wound electrode assembly 10 can be made higher than the heat dissipation performance of the portion located on the outer side of wound electrode assembly 10.

### (Embodiment 5)

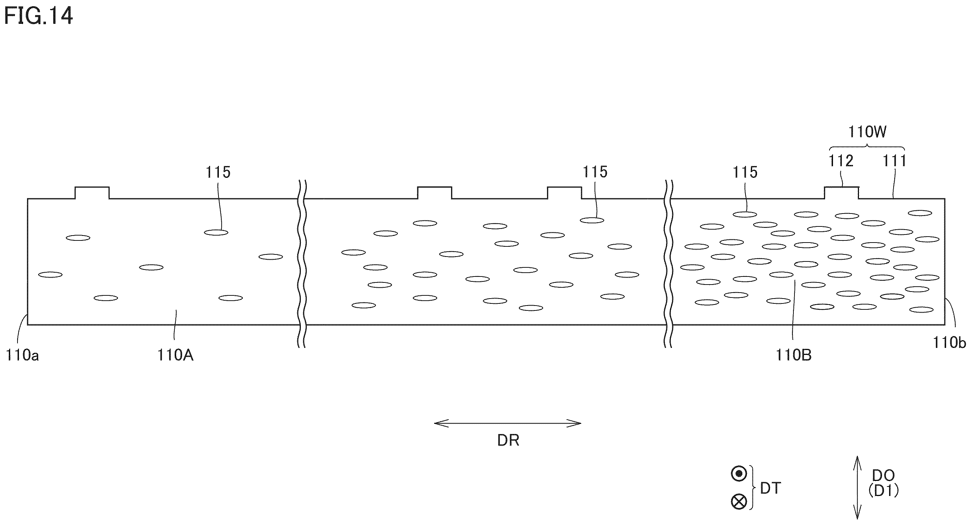

Fig. 14 is a developed view of a resin base member according to Embodiment 5. Referring to Fig. 14, a resin base member 110W according to Embodiment 4 will be described.

Resin base member 110W according to Embodiment 5 differs from resin base member 110 according to Embodiment 1 in that the heat dissipation performance is controlled by adjusting the amount of fillers 115 dispersed in a single resin member. Resin base member 110W according to Embodiment 5 can be used for wound electrode assembly 10 in place of resin base member 110 according to Embodiment 1.

As shown in Fig. 14, the amount of fillers 115 dispersed is greater on the inner side of wound electrode assembly 10 than on the outer side of wound electrode assembly 10. As a result, the heat dissipation performance of the portion located on the inner side of wound electrode assembly 10 is higher than the heat dissipation performance of the portion located on the outer side of wound electrode assembly 10. The amount of fillers 115 dispersed may gradually increase or stepwise toward the inner side of wound electrode assembly 10. Fillers 115 may be, for example, metal particles such as aluminum. Even with the configuration as described above, effects similar to those of Embodiment 1 can be obtained.

Although the embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A wound electrode assembly (10) comprising a first electrode (11A) and a second electrode (11B) wound in a flat shape with a separator (12) in between, the second electrode (11B) having a polarity different from that of the first electrode (11A), wherein
the first electrode (11A) includes
a resin base member (110, 110W, 110X, 110Y, 110Z),
a conductive layer provided on a surface of the resin base member (110, 110W, 110X, 110Y, 110Z), and
a first active material layer (200A) provided on a main surface of the conductive layer located opposite to a side on which the resin base member (110, 110W, 110X, 110Y, 110Z) is located with respect to the conductive layer, and
a portion of the resin base member (110, 110W, 110X, 110Y, 110Z) located on an inner side of the wound electrode assembly (10) is higher in heat dissipation performance than a portion of the resin base member (110, 110W, 110X, 110Y, 110Z) located on an outer side of the wound electrode assembly (10).

2. The wound electrode assembly (10) according to claim 1, wherein the resin base member (110, 110W, 110X, 110Y, 110Z) becomes higher in heat dissipation performance gradually or stepwise toward the inner side of the wound electrode assembly (10).

3. The wound electrode assembly (10) according to claim 1, wherein
the resin base member (110) includes a first resin member (110A) and a second resin member (110B) higher in heat dissipation performance than the first resin member (110A), and
when a direction parallel to a winding axis of the wound electrode assembly (10) is a width direction, in the resin base member (110), a ratio of the second resin member (110B) in the width direction becomes higher than a ratio of the first resin member (110A) in the width direction toward the inner side of the wound electrode assembly (10).

4. The wound electrode assembly (10) according to claim 1, wherein
the resin base member (110Z) is formed of a stack of a first resin member (110A) and a second resin member (110B) higher in heat dissipation performance than the first resin member (110A), and
in the resin base member (110Z), a ratio of the second resin member (110B) in a thickness direction (DT) becomes higher than a ratio of the first resin member (110A) in the thickness direction (DT) toward the inner side of the wound electrode assembly (10).

5. The wound electrode assembly (10) according to claim 1, wherein
the resin base member (110X, 110Y) includes
an inner end portion (110b) located at a first end (110c) in a winding direction (DR) of the wound electrode assembly (10), and
an outer end portion (110a) located at a second end (110d) in the winding direction (DR),
the resin base member (110X, 110Y) is formed of a first resin member (110A) and a second resin member (110B) joined to each other, the first resin member (110A) being located on an outer end portion (110a) side, the second resin member (110B) being located on an inner end portion (110b) side and being higher in heat dissipation performance than the first resin member (110A), and
a ratio of the second resin member (110B) disposed along the winding direction (DR) is higher than a ratio of the first resin member (110A) disposed along the winding direction (DR).

6. The wound electrode assembly (10) according to claim 5, wherein the first resin member (110A) is joined to the second resin member (110B) while biting thereinto along the winding direction (DR).

7. The wound electrode assembly (10) according to any one of claims 3 to 6, wherein the second resin member (110B) has self-extinguishing properties.
